**Europäisches Patentamt**

**European Patent Office**

**Office européen des brevets**

(19)

(11) Veröffentlichungsnummer: **0 194 604**
**B1**

(12)

# EUROPÄISCHE PATENTSCHRIFT

(45) Veröffentlichungstag der Patentschrift:
**01.06.88**

(21) Anmeldenummer: **86103049.2**

(22) Anmeldetag: **07.03.86**

(51) Int. Cl.⁴: **C 03 B 37/06**

(54) Einrichtung zur Herstellung von Mineralfasern aus silikatischen Rohstoffen wie Basalt, nach dem Düsenblasverfahren.

(30) Priorität: **15.03.85 DE 3509424**

(43) Veröffentlichungstag der Anmeldung:
**17.09.86 Patentblatt 86/38**

(45) Bekanntmachung des Hinweises auf die Patenterteilung:
**01.06.88 Patentblatt 88/22**

(84) Benannte Vertragsstaaten:
**BE DE FR IT LU NL**

(56) Entgegenhaltungen:
DE - A - 2 118 081
GB - A - 1 002 109
GB - A - 1 134 685

(73) Patentinhaber: **Grünzweig + Hartmann und Glasfaser AG, Bürgermeister-Grünzweig-Strasse 1-47, D-6700 Ludwigshafen am Rhein (DE)**

(72) Erfinder: **Fachat, Gaston, Im Steg 43, D-6802 Ladenburg (DE)**
Erfinder: **Sistermann, Klaus, In der Almel 37, D-6730 Neustadt (DE)**
Erfinder: **Ungerer, Heinz-Jürgen, Bensheimer Strasse 39, D-6806 Viernheim (DE)**

(74) Vertreter: **Kuhnen, Wacker & Partner, Schneggstrasse 3-5 Postfach 1729, D-8050 Freising (DE)**

## Beschreibung

Die Erfindung betrifft eine Einrichtung zur Herstellung von Mineralfasern aus silikatischen Rohstoffen wie Basalt, nach dem Düsenblasverfahren, gemäss dem Oberbegriff des Anspruchs 1.

Die beim Düsenblasverfahren in der Blasdüseneinrichtung erzeugten Mineralfasern gelangen üblicherweise nach Austritt aus dem Zerfaserungskanal oder Düsenspalt der Blasdüseneinrichtung in einen Fallschacht, in dem die aus den Zerfaserungsaggregaten austretenden Fasern mit zunehmend gleichmässiger Verteilung einen grösseren Querschnitt einnehmen und schliesslich zur Bildung einer Bahn auf einem Förderband abgelegt werden. Im Eintrittsbereich des Fallschachtes erfolgt üblicherweise eine Bedüsung mit Bindemittel wie Phenolharz, sofern gebundene Fasern erzeugt werden sollen. Die eingedüste Bindemittelmenge hängt dabei vom Verwendungszweck der Mineralfasern ab und ist beispielsweise zur Herstellung kompakter Platten mit hohem Raumgewicht erheblich grösser als zur Herstellung etwa von lockerem Filz mit geringem Raumgewicht.

Bei der Aufbringung des Bindemittels müssen die soeben erzeugten Fasern bereits so weit abgekühlt sein, dass eine vorzeitige Aushärtung des Bindemittels infolge zu starker Erwärmung an den Fasern vermieden wird. Daher kann die Eindüsung des Bindemittels erst in einem gewissen Abstand unterhalb der Austrittsseite des Zerfaserungsaggregats erfolgen. Hier weist das die Fasern mitführende, aus dem Zerfaserungsaggregat austretende Strömungsbündel jedoch bereits vergleichsweise grossen Querschnitt auf, so dass eine homogene Einbringung des Bindemittels von den Aussenseiten des Strömungsbündels her schwierig ist.

Weiterhin bieten die Zerfaserungsaggregate, die ganz auf den sehr komplexen Vorgang der Zerfaserung ausgerichtet sein müssen, praktisch keine Möglichkeiten, die Ausrichtung der Austrittsströmung der Fasern im Sinne einer gewünschten Beeinflussung der Bildung der Mineralfaserbahn einzustellen. Zwar können die Wände des Fallschachtes als sogenannte Schwingwände ausgebildet und einstellbar gehalten werden, jedoch beeinflusst dies lediglich die Randbereiche der Strömung im Sinne einer einstellbaren Begrenzung etwa des Randes der Mineralfaserbahn, während die Verteilung der Fasern über die Breite der Mineralfaserbahn hierdurch praktisch nicht beeinflusst werden kann. Dies wäre jedoch erstrebenswert, da infolge der Absaugung unterhalb des Förderbandes wechselnde und unübersichtliche Strömungsverhältnisse im Fallschacht auftreten können, die zu einer unregelmässigen Faserablage führen, wenn keine besonderen Beeinflussungsmöglichkeiten vorhanden sind.

Schliesslich führt ein relativ grosser freier Abstand zwischen der Austrittsseite der Zerfaserungsaggregate und dem Eintrittsbereich des Fallschachtes, wie er schon aus konstruktiven Gründen nicht vermieden werden kann, zu unübersichtlichen Strömungsverhältnissen an der Austrittsseite der Zerfaserungsaggregate. Hierbei können lokale Rückströmungen auftreten, die bis in den Austritt des Zerfaserungskanals zurückwirken und dort Druckstösse erzeugen. Derartige Strömungsstörungen führen zu erhöhter Bildung sogenannter Perlen, also nicht zu Fasern verzogener Schmelzenreste, die im Produkt höchst unerwünscht sind. Diese Gefahr einer erhöhten Perlenbildung ist besonders gross, wenn mit breitem Zerfaserungskanal bei relativ geringen Strömungsgeschwindigkeiten gearbeitet wird, und relativ dicke Fasern mit Durchmessern von über 10 μm erzeugt werden sollen, die relativ langsam abkühlen und daher bei gegenseitiger Berührung etwa im Zuge der Schleifenbildung auch im Austrittsbereich des Zerfaserungskanals noch im Sinne einer Perlenbildung sehr anfällig sind.

Bei derartigen, relativ dicken Fasern ist darüber hinaus auch das weiter oben geschilderte Problem einer schnellen Abkühlung vor dem Bindemittelauftrag besonders gravierend, da die Wärmeabfuhr aus dem Faserinneren ohne besondere Zusatzmassnahmen entsprechend lange dauert.

Aufgabe der Erfindung ist es, eine Einrichtung der im Oberbegriff des Anspruchs 1 angegebenen Gattung zu schaffen, welche eine rückströmungsfreie Führung der Strömung von der Austrittsseite des Zerfaserungsaggregats in den Eintrittsbereich des Fallschachtes ermöglicht.

Die Lösung dieser Aufgabe erfolgt durch die kennzeichnenden Merkmale des Anspruchs 1.

Dadurch, das zwischen dem Eintrittsbereich des Fallschachtes und der Austrittsseite der Blasdüseneinrichtung, also des Zerfaserungsaggregats, ein Leitschacht angeordnet ist, der von oben nach unten konvergierenden Querschnitt hat und mit seiner Eintrittsöffnung das aus der Blasdüseneinrichtung austretende Strömungsbündel mit seitlichem Abstand übergreift, wird die Strömung am Ausgang der Blasdüseneinrichtung neu gefasst und ausgerichtet, wobei durch Injektorwirkung infolge des Abstandes zwischen der Aussenseite des Strömungsbündels und der Eintrittsmündung des Leitschachtes weitere Sekundärluft aus der Umgebung angesaugt wird. Diese Sekundärluft dient zur gezielten weiteren Abkühlung der Fasern im Leitschacht sowie zur Erzielung einer gerichteten Strömung zwischen dem Eintrittsbereich des Leitschachtes und der Austrittsseite der Blasdüseneinrichtung, so dass dort Rückströmungen zuverlässig vermieden sind. Am düsenartigen Austrittsquerschnitt des Leitschachtes tritt die Strömung in einem Austritts-Strömungsbündel wieder aus, in dem die mitgeführten Fasern selbst bei grosser Faserstärke ausreichend abgekühlt sind. Dieses Austritts-Strömungsbündel steht sodann für eine gezielte Eindüsung von Bindemittel oder sonstigen wärmeempfindlichen Substanzen zur Verfügung.

Wenn gemäss Anspruch 2 die relative Winkelstellung der Seitenwände des Leitschachtes einstellbar gehalten ist, so können zum einen hinsichtlich der Ansaugverhältnisse für die Sekundärluft und zum anderen hinsichtlich der Austrittsströmverhältnisse bzw. einer gewünschten Strömungsbeschleunigung problemlos Feineinstellungen vorgenommen werden. Dabei ist gemäss Anspruch 3 bevorzugt wenigstens auch der Querschnitt der unteren Austrittsöffnung des Leitschachtes einstellbar, so dass je nach Bedarf der austretende Gas- und Faserstrahl mehr oder weniger gespreizt werden kann. Neben derartigen grundsätzlich symmetrischen Einstellmassnahmen kann auch vorgesehen werden, dass gemäss Anspruch 4 die Seitenwände in unterschiedlichen Winkeln zur Verlängerung der Fallinie der Primärstrahlen einstellbar sind, so dass der austretende Faserstrahl bezüglich der Richtung seiner Flugbahn eingestellt werden kann und so die Faserablageverhältnisse auf dem Förderband gezielt beeinflusst werden können.

Durch die Anordnung von Sprühdüsen im Bereich der Austrittsöffnung des Leitschachtes gemäss Anspruch 5 können fliessfähige Medien in das dort austretende Austritts-Strömungsbündel gezielt eingesprüht werden. Gemäss Anspruch 6 kann auf diese Weise Kühlflüssigkeit eingesprüht werden, um eine schnelle zusätzliche Abkühlung der Fasern zu ermöglichen. Gemäss Anspruch 7 kann zusätzlich oder alternativ Bindemittel eingesprüht werden, wobei die Bindemitteleinsprühung gemäss Anspruch 8 schräg nach unten erfolgt, so dass das fliessfähige Bindemittel ohne Reflexionserscheinungen tief und homogen in das divergierende Strömungsbündel an einer Stelle im Abstand von der Wasserbeaufschlagung eindringen kann. Durch die Ausbildung eines neuen Austritts-Strömungsbündels an der Austrittsseite des Leitschachtes in den Eintrittsbereich des Fallschachtes hinein ergibt sich eine weitere Injektorwirkung und somit eine Ansaugung zusätzlicher Sekundärluft in diesem Bereich, welche die Sprühdüsen von ihrer Rückseite her umströmt und so sauber hält. Zugleich begünstigt die Sekundärluftströmung den Eintrag der Sprühmedien in das Strömungsbündel. Weiter erfolgt durch den Eintrag der weiteren Sekundärluft eine wiederum zusätzliche Abkühlung, so dass selbst bei dicken Fasern keine Gefahr einer vorzeitigen Aushärtung des Bindemittels besteht.

Weitere Einzelheiten, Merkmale und Vorteile der Erfindung ergeben sich aus der nachfolgenden Beschreibung einer Ausführungsform anhand der Zeichnung:

Es zeigt

Fig. 1 eine erfindungsgemässe Einrichtung in einer schematischen Stirnansicht,

Fig. 2 die Einrichtung gemäss Fig. 1 in einer Seitenansicht und

Fig. 3 den oberen Bereich der Einrichtung gemäss den Fig. 1 und 2 in vergrösserter Darstellung mit konstruktiven Einzelheiten in einer Seitenansicht entsprechend der Darstellung in Fig. 2.

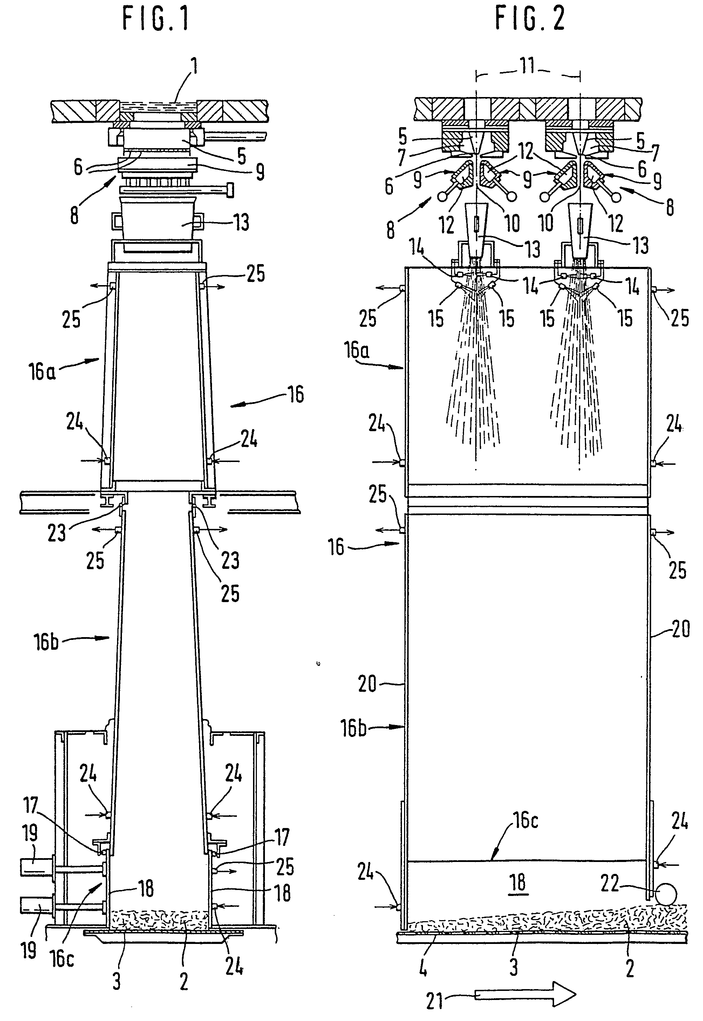

Wie die Fig. 1 und 2 veranschaulichen, dient eine erfindungsgemässe Einrichtung dazu, eine mit 1 bezeichnete mineralische Schmelze im Kopfbereich der Einrichtung in Mineralfasern umzuwandeln, die zur Bildung einer kontinuierlichen Mineralfaser-Bahn 2 auf einem Förderband 3 abgelegt und – in der Darstellung gemäss Fig. 2 nach rechts – weggefördert werden. Das Förderband 2 ist, wie in Fig. 2 angedeutet ist, mit Perforationen 4 versehen, durch welche hindurch in nicht näher veranschaulichter Weise Luft bzw. Gas nach unten abgesaugt werden kann, wie dies bei der Mineralfaserherstellung an sich üblich ist.

Die Schmelze 1 aus einer nicht näher dargestellten Schmelzwanne wird im Beispielsfalle zwei nebeneinander angeordneten Verteilerwannen 5 zugeführt, die je eine Reihe von Austrittsöffnungen 6 für Schmelze besitzen. Die Verteilerwannen 5 sind in der üblichen und bekannten Weise aus Platin gefertigt und werden durch Flammen in seitlichen Hohlräumen 7 auf einer gewünschten Temperatur gehalten.

Unterhalb der Austrittsöffnungen 6 sind, wie beim Düsenblasverfahren im Prinzip ebenfalls üblich ist, Blasdüseneinrichtungen 8 angeordnet, die aus je zwei Blasdüsenhälften 9 und einem dazwischen angeordneten Düsenspalt 10 bestehen, durch welche hindurch aus den Austrittsöffnungen 6 austretende Primärfäden der Schmelze entsprechend den aus Fig. 2 ersichtlichen Fallinien 11 treten und dabei durch Treibgas zerfasert werden, welches mit Überdruck in Hohlräumen 12 der Blasdüsenhälften 9 bereitgestellt und über in den Fig. 1 und 2 nicht sichtbare Einblasschlitze in den Düsenspalt 10 eingeblasen wird. Die dabei prinzipiell ablaufenden Vorgänge sind dem Fachmann geläufig.

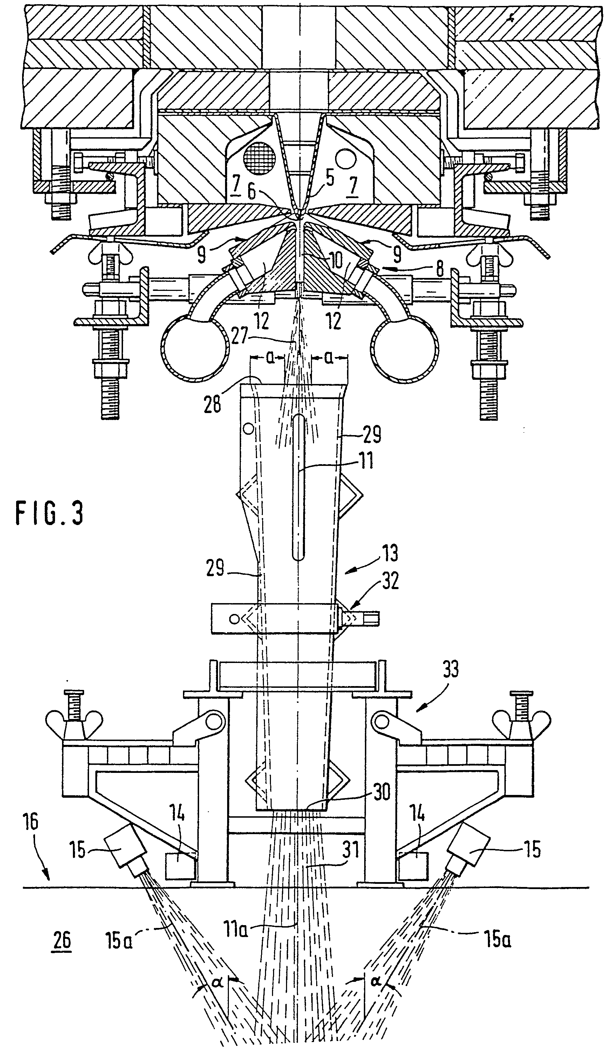

An der in der Zeichnung unteren Austrittsseite der Blasdüseneinrichtungen 8 tritt ein Strömungsbündel 27 (vgl. Fig. 3) aus, das Treibgas, durch die Injektorwirkung des eingeblasenen Treibgases von der Oberseite der Blasdüseneinrichtung 8 her angesaugte Sekundärluft zusammen mit Verbrennungsabgasen aus den Hohlräumen 7 und die soeben gebildeten Fasern bei noch hoher Temperatur enthält. Das Strömungsbündel 27 gelangt in düsenartig konvergierende Leitschächte 13, wodurch an deren Oberseite nochmals Sekundärluft zur weiteren Abkühlung angesaugt wird, und das so gebildete Faser-Gasgemisch am Austritt der Leitschächte 13 unter erneuter Bündelung wiederum in einem Strömungsbündel 31 austritt. Aufgrund der langgestreckten Form der Düsenspalte 10 und Leitschächte 13 sind die Strömungsbündel 27 und 31 natürlich entsprechend langgestreckt ausgebildet und wirken lediglich in einer Fig. 2 oder 3 entsprechenden Ansicht wie schlanke Kreiskegel. Im Bereich des unteren Endes der Leitschächte 13 sind Sprühdüsen 14 zum Eindüsen von Kühlflüssigkeit wie Kühlwasser und Sprühdüsen 15 zum Eindüsen von Bindemittel wie Phenolharz in fliessfähiger Konsistenz angeordnet.

Dies ist zugleich der Eintrittsbereich eines insgesamt mit 16 bezeichneten Fallschachtes, der übereinander angeordnet einen ersten Schachtabschnitt 16a, einen zweiten Schachtabschnitt 16b und einen dritten Schachtabschnitt 16c aufweist. Im Inneren des Fallschachtes 16 kühlen die herabfallenden Fasern weiter ab und verteilen sich über den Querschnitt des Fallschachtes, so dass sich auf dem Förderband 3 eine gleichmässige Ablage als Bahn 2 ergibt, wobei die mitgeführten und mit in den Fallschacht 16 eingeführten Gase in der weiter oben bereits angedeuteten, bekannten Weise abgesaugt werden.

Der untere Schachtabschnitt 16c des Fallschachtes 16 weist bewegliche Seitenwände 18 auf, die beispielsweise über Stellglieder 19 in ihrer Lage durch Parallelverschiebung einstellbar sind und durch Mitnehmer 17 mit den angrenzenden Wänden des mittleren Schachtabschnittes 16b verbunden sind sowie, wie aus Fig. 1 deutlich wird, die seitlichen Ränder der Bahn begrenzen. Wie aus der im Bereich des Fallschachtes 16 aufgeschnittenen Darstellung der Zeichnung hervorgeht, reichen die Stirnwände 20 des mittleren Schachtabschnittes 16b bis in den Bereich des unteren Schachtabschnittes 16c und bilden somit auch dessen Stirnwände. Die Stirnwände 20 des gesamten Fallschachtes 16 sind starr angeordnet, wobei die in Wegförderrichtung gemäss Pfeil 21 hintere Stirnwand entsprechend der Höhe der Mineralfaser-Bahn 2 verkürzt ist, so dass die Mineralfaser-Bahn 2 aus dem Bereich des Fallschachtes 16 auslaufen kann, wobei beim Auslauf sogleich eine Druckbeaufschlagung und Höhenegalisierung durch eine ebenfalls gekühlte Walze 22 erfolgt.

Zwar sind somit einige der Umfangswände des Fallschachtes 16 beweglich, wie etwa die Seitenwände 18 des untersten Schachtabschnittes 16c durch Parallelverschiebung und bei Bedarf auch die Seitenwände des mittleren Schachtabschnittes 16b durch Schwenkbewegung um Scharniere 23, jedoch sind sämtlich Umfangswände als solche starr ausgebildet, besitzen also keine Bewegungsmöglichkeit für eine ständige Selbstreinigung oder dergleichen. Dafür aber sind sämtliche Umfangswände des Fallschachtes 16 doppelwandig ausgebildet und in den so gebildeten Hohlräumen von Kühlflüssigkeit durchströmt, die jeweils durch Anschlüsse 24 zuführbar und durch Anschlüsse 25 abführbar. Bezüglich weiterer Einzelheiten, Merkmale und Vorteile der Blasdüseneinrichtungen 8 und der dortigen Zerfaserung bzw. der Ausbildung des Fallschachtes 16 wird ausdrücklich und vollinhaltlich auf die beiden europäischen Patentanmeldungen EP-A1-0194606 und EP-A1-0194605 derselben Anmelderin mit demselben Einreichungsdatum und Prioritätsdatum verwiesen und Bezug genommen.

In Fig. 3 ist der obere Bereich der Darstellung gemäss den Figuren 1 und 2 ab dem mit 26 bezeichneten Eintrittsbereich des Fallschachtes 16 vergrössert und mit konstruktiven Einzelheiten dargestellt. Wie daraus näher ersichtlich ist, tritt aus dem den Zerfaserungskanal der Blasdüseneinrichtung 8 bildenden Düsenspalt 10 ein Strömungsbündel 27 aus, das nach einer geringen freien Wegstrecke von im Beispielsfalle etwa 6 cm in die mit 28 bezeichnete Eintrittsöffnung des Leitschachtes 13 eintritt. Die Eintrittsöffnung 28 des Leitschachtes 13 weist gegenüber dem Eintrittsquerschnitt des Strömungsbündels 27 erheblich grösseren Querschnitt auf, so dass ein seitlicher Abstand a im wesentlichen symmetrisch zu beiden Seiten des Eintritts-Strömungsbündels 27 verbleibt, durch den durch Injektorwirkung Sekundärluft aus dem Bereich unterhalb der Blasdüseneinrichtung 8 angesaugt wird. Bei gegebener Winkelstellung der mit 29 bezeichneten Seitenwände des langgestreckten Leitschachtes 13 ist der beidseitige Abstand a ein Mass für die Menge der durch die Eintrittsöffnung 28 zusätzlich angesaugten Sekundärluft.

An der unteren Austrittsöffnung 30 tritt das Medium aus dem Eintritts-Strömungsbündel 27 zusammen mit der angesaugten Sekundärluft in einem Austritts-Strömungsbündel 31 gebündelt und neu gefasst wieder aus. Im Mittelbereich des Leitschachtes 13, der im Beispielsfalle etwa 30 cm lang ist, ist eine Einstellhandhabe 32 angeordnet, mit der die relative Winkelstellung der Seitenwände 29 frei einstellbar ist, so dass die Querschnittsfläche der Austrittsöffnung 30 variiert werden kann, und zusätzlich auch der Grad der Verjüngung des Leitschachtes 13 eingestellt werden kann. Darüber hinaus kann die Neigung der beiden Seitenwände 29 unterschiedlich eingestellt werden, so dass sich eine gewisse Abweichung von der Symmetrie zur Verlängerung der Fallinie 11 der Primärfäden und damit eine gezielte Richtungsbeeinflussung des Austritts-Strömungsbündels ergibt.

Im Leitschacht 13 erfolgt eine Kühlung der Fasern zunächst einmal durch die dortige Verweilzeit, unterstützt durch die gezielt in einer gewünschten Menge an der Eintrittsöffnung 28 eingeführte Sekundärluft und den adiabatischen Druckabfall infolge der Strömungsbeschleunigung im Leitschacht 13. Die im Austritts-Strömungsbündel 31 austretenden Fasern sind so bereits gut vorgekühlt, gelangen jedoch zunächst in den Bereich von Sprühdüsen 14 für Kühlflüssigkeit wie Kühlwasser, welches in einem Schleier quer zur Strömungsrichtung des Strömungsbündels 31 unmittelbar nach dem Austritt aus der Austrittsöffnung 30 eingesprüht wird. Ein weiterer Satz von am Umfang des Austritts-Strömungsbündels 31, jedoch natürlich mit Abstand von diesem verteilten Sprühdüsen 15 dient zur Eindüsung von Bindemittel in fliessfähiger Konsistenz, etwa Phenolharz. Die Sprühdüsen 15 sind gegenüber der mit 11a bezeichneten Austrittsachse des Austritts-Strömungsbündels 31 schräg nach unten geneigt, derart, dass die Sprühachsen 15a der Sprühdüsen 15 mit der Achse des Strömungsbündels 31 einen Winkel α von im Beispielsfalle etwa 20° einschliessen. Hierdurch gelangt das Bindemittel in erheblichem vertikalem Abstand von der Kühlflüssigkeit aus den Sprühdüsen 14 auf die Fasern, so dass die Kühlflüssigkeit zuvor noch für eine weitere drastische Abkühlung sorgen kann. Weiterhin hat sich gezeigt, dass ein Winkel α im Bereich zwischen etwa 10° und 45° zur Achse 11a des Austritts-Strömungsbündels 31 ein sauberes und homogenes Eindringen der Sprühstrahlen des Bindemittels in das Strömungsbündel 31 ermöglichen, und auch der Mittelbereich des Strömungsbündels 31 noch gleichmässig benetzt wird. Dies ist für die Qualität des sich ergebenden Produktes insbesondere dann von ausschlaggebender Bedeutung, wenn nur mit relativ geringer Bindemittelmenge gearbeitet wird, wie beispielsweise für die Herstellung von Einsatzkörpern für Auspuffschalldämpfer, für welche dicke, lange Fasern aus der Blasdüseneinrichtung 8 verwendet werden.

Der Eintritt des beschleunigten und neu gefassten Austritts-Strömungsbündels 31 in den Eintrittsbereich 26 des Fallschachtes 16 führt zu einer weiteren Injektorwirkung, mit der Sekundärluft aus der Umgebung eines mit 33 bezeichneten Stellrahmens angesaugt wird, mit dem der Leitschacht 13 auf der Oberseite des Fallschachtes 16 befestigt ist. Hierdurch erfolgt eine Einströmung von Sekundärluft wenigstens grob annähernd parallel zur Sprühachse 15a der Sprühdüsen 15, so dass die Sekundärluft den Eintrag des Bindemittels in das Austritts-Strömungsbündel 31 zusätzlich unterstützt. Weiterhin gewährleistet die Strömung sauberer Luft von der Rückseite der Sprühdüsen 14 und 15 her deren automatische Sauberhaltung. Schliesslich ergibt diese weitere Sekundärluft eine wiederum zusätzliche Kühlwirkung auf die Fasern im Austritts-Strömungsbündel 31, um einer vorzeitigen Aushärtung des Bindemittels so zusätzlich entgegenzuwirken. Dabei lassen sich die Zuluftmengen an der Oberseite des Leitschachtes 13 und der Oberseite des Fallschachtes 16 durch entsprechende Bemessungsmassnahmen so einstellen, dass eine im Hinblick auf die Absaugung im Bereich des Förderbandes 3 zu grosse Luftmenge vermieden werden kann. Hierzu trägt weiter bei, dass ein Eintritt von Falschluft im Bereich des Fallschachtes 16 weitestgehend vermieden ist, wie dies in der bereits genannten europäischen Patentanmeldung EP-A1-0194605 im einzelnen erläutert ist. Damit ist sichergestellt, dass im Bereich des Förderbandes 3 nur solche Luft abgesaugt werden muss, die zuvor einen positiven Beitrag für den Verfahrensablauf geleistet hat.

Die Darstellung in Fig. 3 zeigt weitere, für sich selbst sprechende konstruktive Einzelheiten und ist im übrigen massstäblich, so dass anhand der angegebenen Masse auf nicht näher erläuterte, für eine Optimierung aber möglicherweise gleichfalls wesentliche Bemessungen unmittelbar aus dieser Darstellung geschlossen werden kann.

**Patentansprüche**

1. Einrichtung zur Herstellung von Mineralfasern aus silikatischen Rohstoffen wie Basalt, nach dem Düsenblasverfahren,
— mit einer Schmelzwanne und wenigstens einer daraus gespeisten Verteilerwanne (5) mit Austrittsöffnungen (6) für Primärfäden aus Schmelze (1),
— mit einer unterhalb der Austrittsöffnungen (6) mit Abstand hiervon symmetrisch zur Fallinie (11) der Primärfäden angeordneten Blasdüseneinrichtung (8),
— mit einem unterhalb der Blasdüseneinrichtung (8) angeordneten Fallschacht (16) und
— mit einem am unteren Ende des Fallschachtes (16) angeordneten Förderband (3) zur Ablage und Wegförderung der erzeugten Mineralfasern als kontinuierliche Bahn (2),

dadurch gekennzeichnet, dass zwischen der Austrittsseite der Blasdüseneinrichtung (8) und dem Eintrittsbereich (26) des Fallschachtes (16) ein Leitschacht (13) angeordnet ist, der einen von oben nach unten konvergierenden Querschnitt aufweist und mit seiner Eintrittsöffnung (28) das aus der Blasdüseneinrichtung (8) austretende Strömungsbündel (27) mit seitlichem Abstand (a) umgreift.

2. Einrichtung nach Anspruch 1, dadurch gekennzeichnet, dass die relative Winkelstellung der Seitenwände (29) des Leitschachtes (13) einstellbar gehalten ist.

3. Einrichtung nach Anspruch 2, dadurch gekennzeichnet, dass die Querschnittsfläche der unteren Austrittsöffnung (30) des Leitschachtes (13) einstellbar gehalten ist.

4. Einrichtung nach Anspruch 2 oder 3, dadurch gekennzeichnet, dass die Seitenwände (29) in unterschiedlichen Winkeln zur Verlängerung der Fallinie (11) der Primärstrahlen einstellbar gehalten sind.

5. Einrichtung nach einem der Ansprüche 1 bis 4, dadurch gekennzeichnet, dass im Bereich der Austrittsöffnung (30) des Leitschachtes (13) ausserhalb des Umfangsbereiches des dort austretenden Strömungskegels (31) Sprühdüsen (14, 15) angeordnet sind.

6. Einrichtung nach Anspruch 5, dadurch gekennzeichnet, dass wenigstens ein Teil der Sprühdüsen (14) an eine Zufuhreinrichtung für Kühlflüssigkeit, insbesondere Kühlwasser, anschliessbar ist.

7. Einrichtung nach Anspruch 5 oder 6, dadurch gekennzeichnet, dass wenigstens ein Teil der Sprühdüsen (15) an eine Zufuhreinrichtung für fliessfähiges Bindemittel, insbesondere Phenolharz, anschliessbar ist.

8. Einrichtung nach Anspruch 7, dadurch gekennzeichnet, dass die Sprühachse (15a) der Sprühdüsen (15) für Bindemittel mit der Achse (11a) des Strömungskegels (31) einen Winkel (α) zwischen 10° und 45°, insbesondere von etwa 20° einschliesst, wobei die Sprühachsen (15a) der Sprühdüsen (15) nach unten geneigt angeordnet sind.

**Claims**

1. Apparatus for producing mineral fibres from silicate raw materials, such as basalt, by the jet process, comprising
— a melting tank and at least one distributor tank (5), which is fed from the melting tank and provided with outlet openings (6) for primary threads of molten material (1),
— blast nozzle means (8), which are disposed below and spaced from the outlet openings (6) and symmetrical with respect to the trajectory (11) of the primary threads,
— a downshaft (16), which is disposed below the blast nozzle means (8), and
— a conveyor belt (3), which is disposed at the lower end of the downshaft (16) and serves to receive and carry away the resulting mineral fibres as a continuous web (2),
characterized in that a guide shaft (13) is provided between the outlet side of the blast nozzle means (8) and the inlet portion (26) of the downshaft (16) and has a cross-section that converges from top to bottom, and the guide shaft has an entrance opening (28) which surrounds with a lateral clearance (a) the stream bundle (27) which exits from the blast nozzle means (8).

2. Apparatus according to claim 1, characterized in that the side walls (29) of the guide shaft (13) are held in an adjustable relative angular position.

3. Apparatus according to claim 2, characterized in that the cross-sectional area of the lower outlet opening (30) of the guide shaft (13) is adjustable.

4. Apparatus according to claim 2 or 3, characterized in that the side walls (29) are adjustably held at different angles to the continuation of the trajectory (11) of the primary threads.

5. Apparatus according to any of claims 1 to 4, characterized in that spray nozzles (14, 15) are provided adjacent to the outlet openings (30) of the guide shaft (13) outside the region of the periphery of the flow cone (31) which exits there.

6. Apparatus according to claim 5, characterized in that at least part of the spray nozzles (14) are adapted to be connected to means for supplying a liquid coolant, particularly cooling water.

7. Apparatus according to claim 5 or 6, characterized in that at least part of the spray nozzles (15) are adapted to be connected to means for supplying a flowable binder, particularly phenolic resin.

8. Apparatus according to claim 7, characterized in that the spray axis (15a) of the spray nozzles (15) for binder includes an angle (α) between 10° and 45°, particularly of about 20°, with the axis (11a) of the flow cone (31), and the spray axes (15a) of the spray nozzles (15) are downwardly.

## Revendications

1. Dispositif pour fabriquer des fibres minérales à partir de matières brutes siliceuses telles que le basalte, selon le procédé d'étirage par soufflage, comportant:
— une cuve de fusion et au moins une auge de distribution (5), alimentée par la cuve de fusion et pourvue de trous de sortie (6) pour des filaments primaires de matière en fusion (1);
— un système de tuyères de soufflage (8), situé en dessous des trous de sortie (6) à une certaine distance de ceux-ci et symétriquement par rapport à l'axe de chute (11) des filaments primaires;
— un puits de chute (16), disposé en dessous du système de tuyères de soufflage (8);
— et une bande transporteuse (3), disposée en regard de l'extrémité inférieure du puits de chute (16), pour recevoir les fibres minérales qui se déposent sur cette bande et en assurer l'évacuation sous la forme d'un tapis continu (2);
caractérisé en ce qu'il comporte une jupe de guidage (13), disposée entre la face de sortie du système de tuyères de soufflage (8) et la zone d'entrée du puits de chute (16), cette jupe de guidage présentant une section transversale qui va en se rétrécissant du haut vers le bas et une ouverture d'entrée (28) adaptée à entourer le jet de gaz et de fibres (27) sortant du système de tuyères de soufflage (8), avec une certaine marge (a) dans le sens latéral.

2. Dispositif conforme à la revendication 1, caractérisé en ce que le calage angulaire relatif des parois latérales (29) de la jupe de guidage (13) est réglable.

3. Dispositif conforme à la revendication 2, caractérisé en ce que la surface de la section transversale de l'orifice de sortie inférieur (30) de la jupe de guidage (13) est réglable.

4. Dispositif conforme à l'une des revendications 2 ou 3, caractérisé en ce que les parois latérales (29) sont réglables suivant des angles différents par rapport au prolongement de la ligne de chute (11) des filaments primaires.

5. Dispositif conforme à l'une des revendications 1 à 4, caractérisé en ce qu'il comporte des gicleurs de projection (14, 15) disposés au voisinage de l'orifice de sortie (30) de la jupe de guidage (13) et en dehors de la zone du périmètre du jet conique de gaz et de fibres (31) qui débouche de cet orifice de sortie.

6. Dispositif conforme à la revendication 5, caractérisé en ce qu'au moins une partie des gicleurs de projection (14) peuvent être raccordés à un circuit d'arrivée de liquide de refroidissement, tel que de l'eau.

7. Dispositif conforme à l'une des revendications 5 ou 6, caractérisé en ce qu'au moins une partie des gicleurs de projection (15) peuvent être raccordés à un circuit d'arrivée d'un liant fluide, tel qu'une résine phénolique.

8. Dispositif conforme à la revendication 7, caractérisé en ce que l'axe de projection (15a) de chacun des gicleurs (15) prévus pour le liant fluide fait un angle (α) compris entre 10° et 45° avec l'axe (11a) du jet conique (31), cet angle ayant en particulier une valeur d'environ 20°, et les axes de projection (15a) des gicleurs (15) étant inclinés vers le bas.

FIG.1

FIG.2

0 194 604

FIG.3